(19) Europäisches Patentamt
European Patent Office
Office européen des brevets

(11) EP 4 506 746 A1

(12) EUROPEAN PATENT APPLICATION
published in accordance with Art. 153(4) EPC

(43) Date of publication:
12.02.2025 Bulletin 2025/07

(51) International Patent Classification (IPC):
G02B 27/09 (2006.01)

(21) Application number: 23778559.7

(86) International application number:
PCT/ES2023/070196

(22) Date of filing: 28.03.2023

(87) International publication number:
WO 2023/187238 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.04.2022 ES 202230298

(71) Applicants:
• Universitat Politècnica de València
46022 Valencia (ES)
• Consejo Superior De Investigaciones Científicas
-
CSIC
28006 Madrid (ES)

(72) Inventors:
• GARCÍA GARRIGÓS, Juan José
46022 Valencia (ES)
• CAMARENA FEMENIA, Francisco
46022 Valencia (ES)
• CEBRECOS RUIZ, Alejandro
46022 Valencia (ES)
• BENLLOCH BAVIERA, José María
46022 Valencia (ES)

(74) Representative: TRBL Intellectual Property
Plaza de Castilla 3, 7°A
28046 Madrid (ES)

(54) **OPTICAL DEVICE, SYSTEM AND METHOD FOR PRODUCING PHOTOACOUSTIC IMAGES USING HOMOGENISED BEAMS FROM PULSED LIGHT SOURCES**

(57) **The** invention relates to an optical device (1) for shaping and homogenising a light beam (2), which comprises a source (3) of light beams or pulses (2), a multimode optical fibre (7) having a polygonal cross-section; an optical coupling module (5) to direct the light beam (2) from the source (3) to the fibre (7); and an optical direction module (13) to direct and focus a formed and homogenised light beam or pulse (14) from the outlet side (7") of the optical fibre (7) to a sample (19). Also disclosed is a system that uses the device (1), which further includes an ultrasound-receiving transducer (21) and an acquisition and processing unit, in order to obtain photoacoustic images of the sample (19) in optical-resolution or acoustic-resolution photoacoustic microscopy applications and/or tomography applications.

FIG. 1

EP 4 506 746 A1

**Description**

**FIELD OF THE INVENTION**

The present invention falls within the field of ultrasound imaging techniques. More specifically, the invention relates to a device, a system and a method for producing photoacoustic or optoacoustic images, which allows generating functional, molecular and anatomical images of substances or structures present in various tissues or samples, preferably of biological origin.

**BACKGROUND OF THE INVENTION**

The photoacoustic effect describes the generation of ultrasound in a tissue previously illuminated with high-intensity short light pulses (understood as light beams), typically generated by a laser source. The molecules of the tissue on which these pulses (with a duration in the nanosecond range and a frequency in the visible or near-infrared band) impinge absorb part of the energy of the optical pulses and transform it into a series of rapid thermo-elastic expansions, thus producing acoustic pressure waves in the ultrasound range.

The use of this effect in obtaining images of tissues, preferably biological, is well known in the state of the art. In recent years, this has allowed the development of various techniques to obtain functional, molecular and anatomical images in a non-invasive manner, as it is not based on the use of ionising radiation, which is especially advantageous in the case of the study of living tissue.

Likewise, to observe specific areas of the sample illuminated with suitable contrast, the light frequency needs to be tuned so that it adjusts to the absorption band of the chromophores (regions present in molecules of certain substances where the energy difference between molecular orbitals is in the visible or infrared spectrum range) present therein. For this frequency, these regions capable of re-emitting the radiation absorbed in ultrasound waves, have greater optical absorption than the surrounding substances and, thus, present a higher level of contrast in the final image. The chromophores used are usually endogenous, that is, they are naturally present in the tissue studied. Examples of this type of substance include hemoglobin in blood vessels, melanin, responsible for the pigmentation of the epidermis, some lipids in adipose tissue, and collagen and elastin in connective tissue. The fact that these substances are a natural part of the sample to be studied allows the functional response of tissue molecules to be observed without the use of external chemical agents, in contrast to other techniques such as traditional ultrasound, which only provides anatomical images, or more advanced functional ultrasound imaging methods (called fUS) that require external contrast (such as microbubbles) to be able to perform functional studies of the sample, and which are carried out mainly by measuring blood flow using the Doppler effect.

Despite the advantages of endogenous chromophores, in certain cases exogenous chromophores can also be used, which are those introduced externally into the sample with the aim of improving its photoacoustic properties. Examples of these compounds are photosensitive contrast agents based on gold nanoparticles or *Covalent-Organic-Frameworks (COFs),* which have the advantages of being tunable in wavelength, of having a high degree of biocompatibility and of being able to be consumed by tissues of special interest by binding with certain organic molecules, as in the case of glucose in the study of malignant tumours.

With regard to the light beam used to excite tissues and enable them to emit ultrasound, the most common approach in the state of the art is the use of short-duration laser pulses with sufficient energy per unit area (optical fluence), since this enables the generation of broadband ultrasound waves with peak pressures proportional to the optical fluence absorbed in biological tissues. The optimal laser pulses for use in photoacoustic imaging techniques are those with a pulse width of between a few and a hundred nanoseconds, and fluences in the range of 10-100 mJ/cm$^2$, taking into account that the fluence is limited to those values that are below the maximum permissible exposure, standardised to avoid damage to biological tissues.

As for the origin of these pulses, a common option is the use of solid-state laser devices. These lasers, based on *Q-switching* technology, such as Nd:YAG or similar, have a high pulse energy, between 200 and 500 mJ or more, at two fixed wavelengths 1064 nm and 532 nm, but are limited in terms of pulse repetition rate, which varies around 10-100 Hz. In addition, some tunable lasers such as Optical Parametric Oscillators, also based on Nd:YAG in a first phase, are usually used to access multiple wavelength excitations in the visible - near infrared band up to 2500 nm, but with the penalty of being performed at a much lower energy per pulse. However, due to the relatively high energy of the pulses generated by solid-state lasers, they are often preferred for photoacoustic tomography because they can cover larger excitation areas or fields of view with sufficient fluence to trigger detectable ultrasound waves.

On the other hand, photoacoustic microscopy (PAM) scanners attempt to obtain images with high spatial resolution by focusing the light beam on very small excitation points and scanning the beam pixel by pixel throughout the field of view area, as well as at different focal depths within the volume studied. In particular, for the optical resolution photoacoustic technique, since the optical energy is concentrated on small spot areas, much less pulse energy (on the order of microJoules or less) is required to generate photoacoustic waves detectable by common ultrasonic transducers. Therefore, lower energy sources such as Pulsed Laser Diodes (PLD) become a feasible alternative to these imaging methods. Compared to solid-state lasers, PLDs offer much higher pulse repetition rates, above 10 kHz, thus accelerating photoacoustic imaging, and are much cheaper and more compact, so they can be used to build portable and cost-competitive equipment.

However, the use of PLDs in this field also entails some drawbacks. In particular, the light beams obtained with this type of sources are of lower quality because semiconductor-based laser cavity emitters generate highly divergent beams. Furthermore, since the energy produced by these sources is generally lower, in common practice multiple stacked emitters are used, resulting in very wide emission areas and uneven intensity patterns, so the final beams are composed of many transverse modes. The multimodal nature of the beams thus makes focusing on points of interest very difficult, which is commonly resolved by using high numerical amplitude focusing lenses. Although these lenses can help focus beams on the relevant areas, they greatly reduce working distances (WD). This implies that the acoustic waves produced in the sample by the photoacoustic effect can only be generated at very short focal distances by the optical devices normally used, thus limiting the depth at which photoacoustic images are obtained inside the tissue. Which is one of the fundamental advantages of this technique compared to purely optical imaging techniques that are much more superficial.

On the other hand, in photoacoustic microscopy devices based on laser diodes, the multimodal composition of the beams leads to a deterioration in the quality of the final images, since the lateral spatial resolution cannot be reduced without energy losses over the point of interest, which results in poorer signal/noise ratios, or, equivalently, in lower contrasts obtained in the ultrasound detector.

Some of these disadvantages are discussed in a generic manner in patent application US2009109698A1. It describes a method of homogenisation or uniformisation of beams with an irregular transverse emission profile normally emitted by laser diodes using multimode optical fibre with a polygonal section, also presenting various ways of focusing the uniformised beam in a spatial light modulator for projection or *"display"* devices. Likewise, patent applications JP2003121664A, EP2228674A1 and US2013170806A1, use the same concept of transmission by square, rectangular or other core fibre, to solve the uniformization of beam fluence for other applications such as marking, photocoagulation or semiconductor lithography. However, none of these references relate to photoacoustic imaging applications.

In the field of photoacoustics, patent application CN102854142A proposes the use of laser diodes as a source of photoacoustic excitation with an optical configuration of simple beam focusing, without optical fibre and without uniformization of the laser diode beam. Applications US2011303015A1 and CN101813672A, based on the use of laser sources other than the laser diode type with high-quality Gaussian beam profiles and fundamental mode, do propose beam uniformization methods, although very different as they do not use optical fibres therefor. In the first case, a diffusion plate or holographic plate is used to expand the illumination area uniformly, although not in a focused manner. In the second, beam shaping is used for large area diffuse irradiation of the object and detection by a depth scanning piezoelectric detector array.

Finally, patent application WO2009055705A2 describes a confocal photoacoustic microscopy device (i.e., focused light beam) with several possible configurations. In the described method, single-mode optical fibre is used as a possible configuration to transmit the Gaussian fundamental mode beam produced by solid-state laser sources such as Nd:YAG. In addition, spatial filtering is performed with a diaphragm or *pinhole,* performed with the purpose of cleaning high order modes that the main Gaussian beam could contain.

For a more comprehensive understanding of the state of the art related to photoacoustic imaging based on laser diodes, the reader is referred to references [S. Jeon, J. Kim, D. Lee, JW Bak, C. Kim, "Review on practical photoacoustic microscopy", Photoacoustics 15 (2019) 100141*]*, [M. Erfanzadeh, Q. Zhu, "Photoacoustic imaging with low-cost sources; A review", Photoacoustics 14 (2019) 1-11] and [Q. Yao, Y. Ding, G. Liu, L. Zeng, "Low-cost photoacoustics imaging systems based on laser diode and light emitting diode excitation", Journal of Innovative Optical Health Sciences Vol. 10 No. 4 (2017) 17300038].

In view of the problem raised regarding the standardisation of beams emitted by laser diodes in photoacoustic imaging applications, notwithstanding the working distance (WD) or the depth at which said images can be generated inside the tissue, the present invention proposes an improved method of producing images, not present in the state of the art, which solves the aforementioned problem, allowing high-quality images to be obtained in photoacoustic microscopy techniques.

## BRIEF DESCRIPTION OF THE INVENTION

In order to overcome the limitations of the state of the art described above, the present invention aims at providing a novel method for obtaining low-cost photoacoustic images, which solves the problems of inhomogeneity of the light beam with which the samples under study are excited while allowing to increase the lateral spatial resolution of photoacoustic images by using low-quality beam light sources (such as laser diodes or LEDs), without consequences in the reduction of the focusing distance of the light beam, and, thus, without reducing the maximum depth at which the ultrasound acoustic waves are generated within the sample under study by said light beam through the photoacoustic effect.

More specifically, a first object of the invention relates to an optical device for shaping, homogenising, directing and focusing a pulsed light beam onto a material sample, comprising:

- a source of light beams or pulses;
- a multimode optical fibre having a polygonal cross-section core, configured with a light inlet side and outlet side;
- an optical coupling module adapted to direct a light beam or pulse from said source to the inlet side of said optical fibre; and
- an optical direction module adapted to direct and focus a shaped and homogenised light beam or pulse from the outlet side of said optical fibre to a sample.

In this way, after passing through the optical coupling module and the optical fibre, the beam from the source, already shaped and homogenised, is directed to the focal point by means of the optical direction module for photoacoustic excitation, and any known collimation and focusing optics can be used. These optics are responsible for optically combining the plane of the outlet side of the fibre with the focal or focusing plane of the beam, thus reproducing the shape of the fibre core, or of the aperture placed right at the end of the fibre. The zoom factor, or magnification, of the optical configuration employed will ultimately determine the enlargement or reduction of the size of the laser excitation focal point cross-section of the photoacoustic device.

Additionally, in a preferred embodiment of the invention, the light source is a pulsed laser diode, a light emitting diode (LED), or a stacked array thereof. The present invention allows the use of said sources for producing high-resolution photoacoustic images, making use of their advantages such as lightness or low cost and solving their limitations by shaping and homogenising the beam through the use of the device of the invention.

In another preferred embodiment of the invention, the device comprises a surface with an opening arranged on the outlet side of the optical fibre, said opening being substantially centered with respect to the core of said fibre. This allows spatial filtering of the light beam, which results in a reduction in the size of the focus point on the sample and thus a considerable improvement in lateral resolution. Additionally, the aperture of the opening, or in other words, the opening size, can be mechanically adjustable, allowing the lateral resolution required for each use to be selected.

In another preferred embodiment of the invention, the multimode optical fibre having a polygonal cross-section core has a high numerical aperture, which is especially advantageous in cases where light sources are used that provide very divergent light beams, since a high numerical aperture enables the fibre to accept light beams coming from a wide range of incidence angles.

In another preferred embodiment of the invention, the optical coupling module and/or the optical direction module comprise two movable plano-convex aspherical lenses, one for collimation and the other for focusing. Additionally, the direction module may also comprise one or more motorised scanning mirrors, which allow precise focusing on the required point of the sample, as well as scanning the sample in order to obtain complete images thereof.

In another preferred embodiment of the invention, the optical device is part of a system for producing photoacoustic images of a sample of material that additionally comprises an ultrasound-receiving transducer adapted to transform acoustic waves into an electrical signal and a signal acquisition and processing unit. Additionally, the ultrasound transducer is preferably ring-shaped and coaxially surrounds the optical axis of the light beam; the signal acquisition and processing unit preferably comprises a preamplifier, an analogue-digital converter and a device with processing capacity such as a computer that can be connected to a screen or display for real-time display of the photoacoustic images.

The presented system leads to some technical advantages with respect to three main aspects of the performance of photoacoustic microscopy devices, which are discussed below.

Firstly, an increase in the laser fluence at the focal point is obtained, generating an acoustic pressure amplitude directly proportional to said fluence, by having previously concentrated the energy of the laser beam in the core of the optical fibre. In this context, the fluence of the laser beam homogenised by the optical fibre has an almost constant cross-section profile in the illuminated area of the focal plane. Therefore, uniform laser excitation can be provided across the illumination area, which delimits the field of view, for acoustic-resolution photoacoustic microscopy (AR-PAM) devices, where the lateral spatial resolution is determined by the focus of the ultrasound transducer.

Second, an improvement in the lateral spatial resolution of two-dimensional photoacoustic images is obtained in optical-resolution photoacoustic microscopy (OR-PAM) devices, this being determined by the size of the cross-sectional area of the laser focal point. Laser fluence ($\phi$) and the focal point area ($A_0$) can be tailored to the specific requirements of photoacoustic microscopy systems by selecting a fibre with a larger or smaller polygonal core area ($A_1$) and coupling more or less energy from the laser source light beam to the fibre inlet. Thus, the average fluence at the focal point is $\phi = E_0 / A_0$ where $E_0$ is the energy of the light beam pulse that eventually reaches the focal point of area determined by $A_0 = m_d^2 \times A_1$, where $A_1$ is the cross-sectional area of the fibre core and $m_d$ is the magnification factor given by the focusing optics of the optical direction module. For example, for an increase $m_d = 1$ of the collimating and focusing optics, the focal point area will correspond to the cross-sectional area of the fibre core.

Finally, the lateral spatial resolution is improved, or in other words, the area of the focal point $A_0$ is reduced, notwithstanding the focus depth of the direction optics, or the related working distance, which determines the maximum available displacement range of the laser focal point to acquire two-dimensional images at various depths within the tissue, thus allowing three-dimensional or volumetric photoacoustic scanning and imaging.

Due to the technical advantages set forth, the use of the device and the system of the invention for producing photoacoustic images in optical-resolution photoacoustic microscopy applications, in acoustic-resolution photoacoustic microscopy applications and/or in photoacoustic tomography applications is of special interest.

In addition to the introduced device and system, which allow to conveniently adapt some aspects of the beams of low-quality multimode pulsed light sources applied to the excitation of ultrasound waves in photoacoustic imaging systems, a method or procedure for producing photoacoustic images of a material sample is also disclosed, comprising performing the following steps by operating a system as the one described above:

a) arranging a light source adapted to emit light beams or pulses with a duration in the nanosecond range and a frequency in the visible or near infrared band at a distance from the sample equal to or less than the length of the optical fibre;

b) directing the light beams or pulses coming from said source to the inlet side of a high numerical aperture multimode optical fibre having a polygonal cross-section core by adjusting the position of the elements that make up the optical coupling module;

c) focusing said homogenised light beams or pulses on a point of the sample by adjusting the position of the elements that make up the optical direction module;

d) arranging the ultrasound-receiving transducer on the surface of the sample;

e) electronically receiving and processing the signal captured by said transducer by means of a signal acquisition and processing unit, obtaining a photoacoustic image.

Finally, and additionally, steps c-e of this method can be repeated at least once, varying the position of the focal point of the focusing lens by means of a second adjustment of the position of the elements that make up the optical direction module, each time generating a pixel corresponding to a different point of the sample in the plane perpendicular to the direction of the beam and where a subsequent step of assembling said pixels is carried out according to the illuminated position of the sample corresponding to each of them, obtaining a two-dimensional image of the sample. If this same method for obtaining two-dimensional images is repeated in turn, so that in each repetition the position of the focusing lens with respect to the ultrasound transducer is varied along the beam direction, a photoacoustic image of a different plane of the sample will be generated each time in the longitudinal direction to the beam direction, thus making it possible to obtain three-dimensional images of the sample after carrying out a subsequent step of assembling said images according to the illuminated position of the sample corresponding to each of them.

The present invention describes a method for producing quality photoacoustic microscopy images by using pulsed laser diodes or a stacked array thereof whose multimode beams have been homogenised and shaped to present the following properties:

- Flat and uniform distribution of beam energy and fluence, providing high image contrast;
- High lateral spatial resolution down to a few micrometres;
- Working distance in the centimetre range, enabling access to a wide range of axial excitation depths in the sample, and providing a larger space to place the ultrasound detector.

In the present invention, these beam properties are achieved by performing two main steps. First, the light beam is coupled to a multimode optical fibre having a polygonal section (such as square, rectangular, octagonal, etc.) using conventional optical coupling devices known in the state of the art, such as: two mobile plano-convex aspherical lenses, one for collimation and the other for focusing, as well as an optical fibre inlet support, or even by direct coupling. In this way, the fluence and intensity pattern emitted by the PLD source is homogenised thanks to the mixing of spatial modes of the original beam carried out within the fibre by means of multiple total internal reflections on the walls of its core. Additionally, better beam fluence homogenisation results are obtained if the fibre length is equal to or greater than 1 m. This results in a beam cross-sectional profile with uniform and flat or *flat-top* intensity distribution at the outlet side of the fibre, where the cross-section of the beam has the same shape as the fibre core, and where the asymmetric divergence for the fast (vertical) and slow (horizontal) modes is symmetrised by the common numerical amplitude of the fibre. Likewise, lateral resolution is improved thanks to the diaphragm-type aperture or *pinhole* arranged on the outlet side of the optical fibre.

Other objects of the invention relate to the particular embodiments described in the claims of the present application.

Within the scope of interpretation of the invention, the term "substantially" shall be understood as "identically" or comprised within a range of variation of 10%.

## DESCRIPTION OF THE DRAWINGS

The above and other characteristics and advantages will be more fully understood from the detailed description of the invention, as well as from the preferred exemplary embodiments referred to in the attached drawings, wherein:

- Figure 1 schematically corresponds to a photoacoustic microscopy optical resolution scanner, presented as a possible embodiment of the invention, based on the use of a set of PLDs as a laser source coupled to the beam homogenisation device of the invention.

- Figure 2a shows a longitudinal view of a multimode optical fibre having a polygonal cross-section core as the one used in the method of the invention.

- Figure 2b shows the cross-sectional view of two multimode optical fibres having a polygonal cross-section core (one square and one octagonal) as those used in the method of the invention.

- Figure 2c shows the outlet side of the multimode optical fibre having a polygonal cross-section core used in the method of the invention, and, more specifically, the position of the diaphragm opening or *pinhole.*

- Figure 3a shows an experimental CCD camera image with 4.5 micrometre pixel size and the beam cross-section fluence profiles at the emitting surface of a 3x3 PLD array with 200x280 square micrometres total area.

- Figure 3b shows an experimental CCD camera image with 4.5 micrometre pixel size and the beam cross-section fluence profiles at the emission area of the PLD focused at the inlet of a multimode fibre with a square fused silica core with a 150 micrometre edge.

- Figure 3c shows an experimental CCD camera image with 4.5 micrometre pixel size and the fluence profiles of the homogenised beam cross-section at the outlet side of the optical fibre after passing through the 2-metre-long fibre.

- Figure 4a shows an experimental CCD camera image with 4.5 micrometer pixel size and the beam cross-section fluence profiles at the focal point of the optical direction module of the beam for a square focal point with a 75 micrometres edge, homogenised with an almost flat profile.

- Figure 4b and the beam cross-section fluence profiles at the focal point of the optical direction module of the beam for a circular focal point of 10 micrometres in diameter, after spatial filtering using a diaphragm or *pinhole* located on the outlet side of the fibre.

NUMERICAL REFERENCES OF THE DRAWINGS

| (1) | Optical device for shaping and homogenising a beam |
|---|---|
| (2) | Light beam or pulse |
| (3) | Light source |
| (4) | Controller |
| (5) | Optical coupling module |
| (6) | Focused pulse or beam |
| (7) | Optical fibre |
| (7') | Fibre inlet side |
| (7") | Fibre outlet side |
| (8) | Protective outer coating |

(continued)

| | |
|---|---|
| (9) | Core coating |
| (10) | Fibre core |
| (11) | Opening, diaphragm or *pinhole* |
| (12) | Diaphragm support surface |
| (13) | Optical direction module |
| (14) | Formed and homogenised beam |
| (15) | Focal point |
| (16) | Directional focus lens |
| (17) | Motorised scanning mirror or mirror system |
| (18) | Image or imaging focal plane |
| (19) | Sample |
| (20) | Photoacoustic waves/ultrasound |
| (21) | Ultrasound transducer (UST) |
| (22) | Preamplifier |
| (23) | Analogue-digital converter |
| (24) | Processor or computer |
| (25) | Screen or *display* |
| (26) | Optical fibre inlet support |
| (27) | Coupling collimator lens |
| (28) | Coupling focus lens |
| (29) | Directional collimator lens |

## DETAILED EXPLANATION OF THE INVENTION

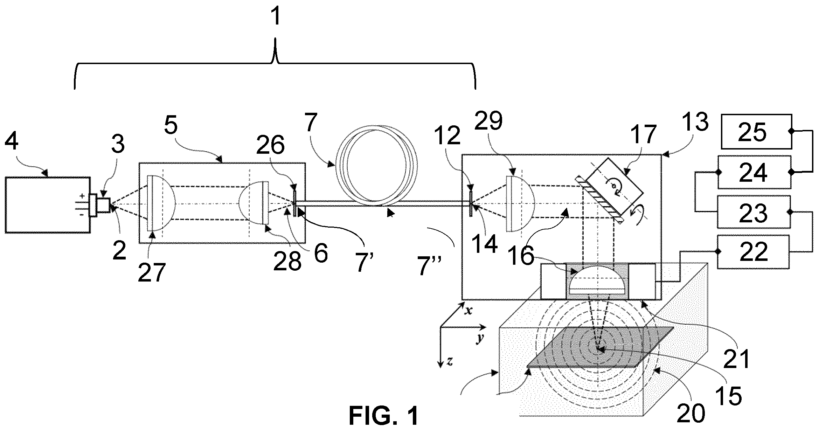

A detailed description of the invention is set forth below based on the FIGS. 1-4 of this document. This description is provided for illustrative, but not limiting, purposes of the claimed invention.

Fig. 1 schematically represents the constituent elements of a system for producing photoacoustic images corresponding to an OR-PAM type photoacoustic imaging scanner, according to a preferred embodiment of the system of the invention. This scanner is divided into two main parts: an optical device (1) for the generation, shaping and homogenisation of light beams or pulses (2), and an ultrasound detection and acquisition device. Like the system for producing photoacoustic images, the optical device (1) for the generation, shaping and homogenisation of light beams or pulses (2) comprised in said system is also, in itself, a main object of the present invention.

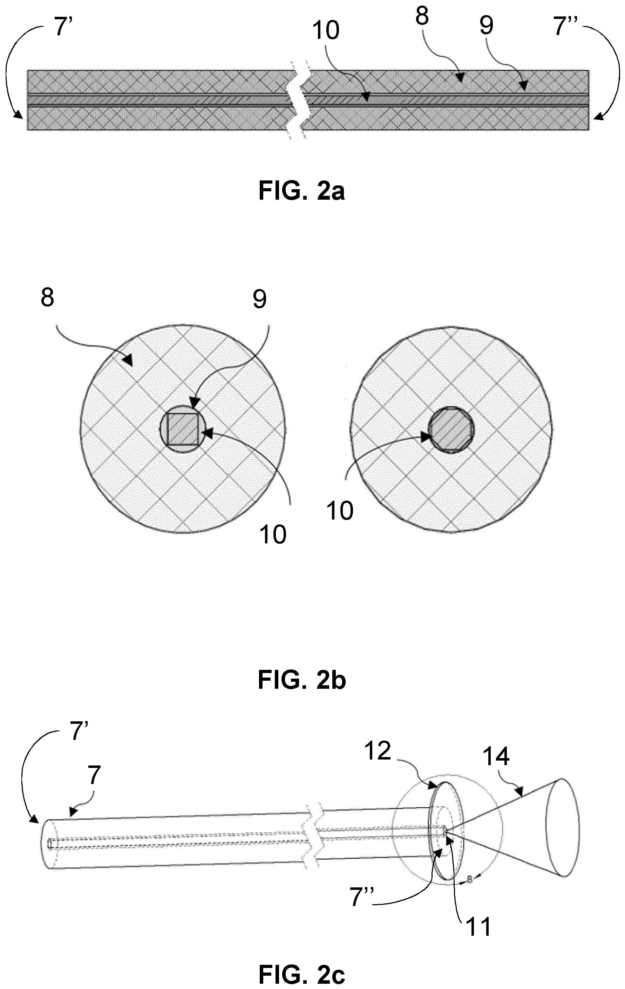

In the optical device (1), the light beams or pulses (2) are generated by a light source (3), preferably a PLD laser, through electric current pulses from a controller (4). An optical coupling module (5) couples the power of the light beam (2) to an optical fibre (7), turning said light beam (2) into a beam (6) focused on the inlet side (7') of the fibre. The optical fibre (7) is preferably multimode type and of any length. Furthermore, the optical fibre (7) is preferably provided with an outer protective coating (8), a core coating (9) and a polygonal cross-section core (10). FIGS. 2a-b show the geometric details of square and octagonal optical fibres (7), as two examples for the proper shaping and homogenisation of the PLD multimode light beam (2). Fig. 2a shows a longitudinal section of the optical fibre (7), where its main constituent parts are indicated: the internal core (10), the external protective coating (8) and the core coating (9). FIG. 2b also shows the details of two examples of polygonal fibre cross-sections (7) with square core (10) and octagonal core (10) geometries.

Finally, an optical direction module (13) directs the formed and homogenised beam (14) from the outlet side (7") of the fibre to the focal point (15) with an area size determined by the optical direction module (13), and focused on the image plane (18), at the working distance of the focusing lens (16) which is directly related to its focal length. The scanning of the image plane (18), located at a certain depth of penetration inside the sample, is carried out by means of a system of motorised mirrors (17) located in the optical direction module (13) (as shown in FIG. 1), thus moving the focal point (15) of the beam to the different x and y coordinate positions of said image plane (18).

In addition to this, an improvement of the lateral resolution can be achieved by spatial filtering with a small opening (11), for example, with a sheet or surface (12) equipped with a diaphragm or *pinhole,* centred in front of the outlet side (7") of the fibre (7) core, as shown in FIG. 2c. In it you can see the outlet side (7") of the fibre (7) with the opening (11) centred thereon. This is of particular interest in optical-resolution photoacoustic microscopy devices. Thanks to the almost uniform fluence cross-section at the fibre (7) outlet, the shape of the light beam (14) through the aperture area of the diaphragm ($A'_1$) is reflected in the focal plane (18) of the direction module (13) with a reduced focal point area (15) ($A'_0$) and proportional to the magnification factor $m_d$, (with a value less than or equal to 1) of the optical direction module (13), following the corresponding ratio $$A'_0 = m_d^2 \times A'_1$$, to obtain a better lateral resolution with approximately constant fluence given by the homogenised light beam (14) of the optical fibre. With this spatial filtering method, the focal point (15) and therefore the lateral resolution can be reduced by decreasing the aperture of the diaphragm (11) down to a few micrometers, depending on the laser wavelength used, without changing the effective focal length of the direction module (13) objective and thus maintaining the optical depth of focus and the working distance of the image. Additionally, if the aperture of the diaphragm or *pinhole* (11) comprised in the optical device is mechanically adjustable, this provides an excellent advantage when selecting the desired lateral resolution for observing the sample.

Photoacoustic waves (20) are generated as ultrasound waves as a result of the optical power of the incoming light beams (2), typically a few nanoseconds in duration, in the focal point (15) area through the photoacoustic effect. This is described by the well-known relationship $P(r) = \Gamma\mu_a(r)\phi(r)$ which states that the optical fluence at a given spatial point r in the sample (19) is converted into a pressure pulse of amplitude P proportional to it, where $\mu_a$ is the optical absorption at this point, and $\Gamma$ is the Grüneisen parameter, which depends on the thermodynamic and elastic properties of the medium.

For its part, the ultrasound detection and acquisition device of the invention preferably comprises any ultrasound transducer (UST) (21) that surrounds the light beam (2) coaxially, arranged in the so-called reflection mode, and in direct physical contact with the sample (19), or through an intermediate high-ultrasound-transmission medium (such as coupling gels). The UST (21) then receives the ultrasonic waves (20) that propagate at the speed of sound in that medium and converts them into electrical signals. These signals are amplified and digitised respectively by a preamplifier (PREAMP) (22) and an analogue-digital converter (ADC) (23) for subsequent digital processing of the image on a computer (24), as shown in the diagram in FIG. 1. This computer can then be connected to a screen or *display* (25) in order to view the generated images, in some cases even in real time. Therefore, in the OR-PAM scanner each photoacoustic image frame is finally recorded as a 2D map of acoustic pressure amplitudes (or squared amplitudes) where each position of the laser focal point (15) in the scanned image plane (18) corresponds to a pixel of the two-dimensional photoacoustic image.

Depth scans can also be performed along the z-axis to produce 3D volumetric images of 2D frame slices, for example by moving the focusing lens (16) relative to the UST (21), which remains fixed and in contact with the surface of the sample (19). The maximum scanning range within the material sample (19) is provided by the working distance of the focusing lens (16), so that the focal point (15) can be focused from the sample surface to a maximum depth given by the working distance of the lens (16). For this reason, a sufficient working distance is usually required to obtain images at depths of up to several millimetres, this being one of the main advantages of photoacoustic imaging compared to purely optical imaging techniques which are much shallower. In addition, the use of flexible optical fibres (7) allows for an advantageous design, since the optical direction module (13) can be moved independently and placed at any desired position on the sample (19) surface, thus facilitating its practical application for imaging.

As for the optical method for beam shaping in the OR-PAM scanner, the light beams or pulses (2) are generated by a stack of PLDs used as a light source (3) that is connected to its current pulse controller (4), or PLD driver, through its positive and negative electrodes with direct polarity. The PLD controller (4) supplies a pulse train, these being above the PLD current intensity threshold to emit laser light, with a duty cycle given by $D = t_p F_p$, determined by the duration of the pulse width $t_p$ and the pulse repetition rate $F_p$ programmed in the controller (4). Thus, the PLD gives rise to a pulsed light beam (2) with the same time profile and with power of the optical pulses proportional to the intensity of current supplied to the PLD by the controller (4). To prevent damage to the PLD, the current intensity, duty cycle and pulse width are set below the maximum value provided in the PLD manufacturer's specifications.

In order to achieve higher maximum optical powers, the PLD source (3) is built with multiple individual laser diode emitters, usually arranged in horizontal monolithic bars with a certain number of emitters per bar, while these bars can also be stacked vertically covering a global emission area $A_2$. Therefore, the cross-section of the emitted light beam (2) will have a nonuniform intensity or fluence pattern corresponding to any configuration of the array of individual emitters.

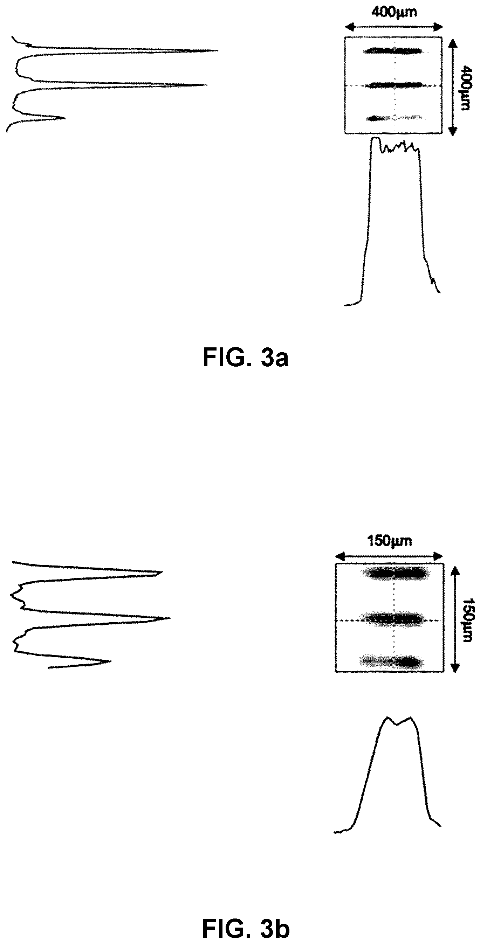

FIG. 3a shows an image taken with a CCD camera of the emission cross-section of the light beam (2) for a specific stacked array of 3 by 3 PLDs with an emission area $A_2$ = 200x280 $\mu m^2$ (framed with a black square in FIG. 3a). The maximum power and central wavelength are, for this PLD, around 200 W and 905 nm respectively. The energy of the light beam (2) of this PLD beam is then estimated at 20 $\mu$J for a light beam width (2) of 100 ns, and where its repetition frequency of the light pulses (2) can reach up to 10 kHz.

As shown in the OR-PAM scanner embodiment of FIG. 1, the light beams or pulses (2) coming from the PLD light source (3) are coupled to an optical fibre (7) having a polygonal cross-section core (10) by means of an optical coupling module (5) that is capable of launching most of the power of the light beam (2) from the PLD emission area $A_2$, to the core

(10) area of the fibre $A_1$. For a core (10) area of the fibre larger than the PLD emission area, $A_1 > A_2$, direct coupling without optics can be implemented after proper alignment of the fibre core (10) with respect to the PLD area centres. Otherwise, an optical coupling module (5) with a magnification factor, denoted as $m_c$ may be required, to match the cross-section of the light beam (2) at least up to the area of the fibre core (10), since $A_1 = m_c^2 \times A_2$. Alignment of the position of the inlet side (7') of the fibre core (10) with the position of the beam (6) focused by the optical module on the fibre side (7') is normally necessary to maximise the inlet power sent to the fibre core (10), which can be done, for example, by precisely adjusting the position of the fibre inlet support (26) with micrometric translations in the two directions transverse to the optical axis.

The coupled light beam (2) is guided along the fibre (7) until it exits through the outlet side (7") of the fibre (7) with a divergence given by the numerical aperture of the fibre (7) and with an approximately uniform, or homogenised, fluence cross-section.

The numerical aperture (NA) of the fibre (7) provides the maximum acceptance angle of the incoming light beam (2) that will be guided through the fibre core (10) by multiple total internal reflections at the core/coating interface. The numerical aperture is given based on the refractive indices of the mentioned fibre (7) elements according to the well-known ratio $NA = \sqrt{n_{core}^2 - n_{coating}^2}$. Therefore, high numerical aperture fibres (7) will normally be needed for highly divergent light beams (2) coming from the PLD source (3) and the optical coupling module (5), in order to achieve effective mode mixing along the fibre core (10) and therefore obtain better homogenisation of the light beam (2) at the outlet of the fibre (7). The length of the fibre (7) will also improve the homogenisation of the light beam (2), with approximately constant fluence profiles typically for one or two metre fibres (7).

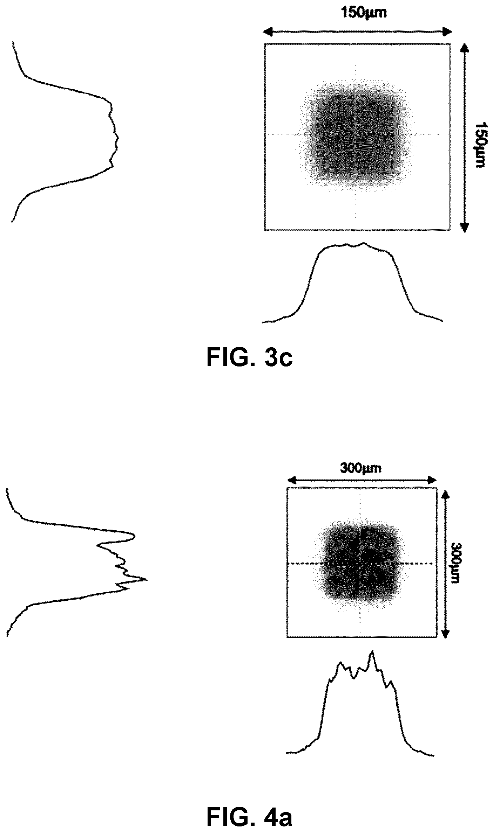

FIGS. 3b and 3c show CCD camera images of the fluence distribution of the cross-section of the light beams or pulses (2) at the inlet of the fibre (7) in the focal plane of the optical coupling module (5) and at the outlet of the fibre (7), respectively. These experimental data are provided to evaluate the performance of fibre homogenisation (7), and for a particular embodiment of the system of FIG. 1 which corresponds to the aforementioned PLD stack with a 3 by 3 emitter configuration (see pattern in FIG. 3a), a multimode optical fibre (7) with a square core (10) of 150 $\mu$m per side, numerical aperture of 0.39 and 2 m length, and an optical coupling module (5) composed of two plano-convex aspherical lenses, the first lens (27) being to collimate the beam and the second lens (28) to focus it on the fibre core, and their respective nominal focal lengths being $f_1 = 20.1$ mm and $f_2 = 10.5$ mm. Thus, this optical coupling module (5) has an increase given by $m_c = f_2/f_1 \approx 0.5$, so that the PLD emission area $A_2$ is reduced by approximately a factor of 4 to fit the cross-section of the core (10) of the fibre $A_1$. Ray-tracing simulations, reproducing the same optical configuration, show a good homogenisation of the cross-section of the fluence of the light beam (2) at the outlet of the fibre (7) both for a square core (10) of 150 $\mu$m per side, and for an octagonal core (10) with an 150 $\mu$m apothegm diameter (octagonal diameter within the circumscribed circle).

The homogenised beam (14) coming from the outlet of the fibre (7) is transported to the final focal point (15) by the optical direction module (13) of the OR-PAM system or scanner, which keeps the collimation (29) and focusing (16) lenses and the x-y scanning mirror system (17) on the same mechanical support, and to which is coupled the ring-shaped ultrasound transducer (21) that coaxially surrounds the light beam (14), as shown in the embodiment of FIG. 1. With this optical configuration, the cross-section of the beam (14) fluence formed at the outlet of the fibre (7), of area $A_1$, is displayed at the final focal point (15) with the same uniform fluence distribution throughout its area $A_0 = m_d^2 \times A_1$, of a size proportional to the magnification or increase factor $m_d = f_2/f_1$ of the optical direction module (13), according to the ratio of focal lengths of the collimation lenses (29) and focusing lenses (16) respectively.

FIG. 4a shows a CCD camera image of the cross-sectional shape of the laser focal point (15) and the homogenised fluence distribution obtained for the same 150 $\mu$m square core (10) fibre (7) of the experimental example described above. The light beam (14) formed at the outlet of the fibre with the fluence cross-section shown in FIG. 3c, is transported to the focal plane (18) by means of the particular optical direction module (13) composed of two plano-convex aspherical lenses with a magnification or increase factor $m_d = f_2/f_1 \approx 0.5$, where the focal lengths of the first (29) and second (16) lenses are $f_1 = 20.1$ mm and $f_2 = 10.5$ mm respectively. The final focal point (15) thus has the same square shape as the fibre core (10), but with an area reduced by a factor of 4 with respect to the area of the core (10) at the fibre outlet, and with the square area side reduced by a factor of 2, to about 75 $\mu$m per side. The maximum penetration range into the sample of the focal point (15) is given by the working distance of the focusing lens (16), which specifically has a focal length of $f_2 = 10.5$ mm, for which the working distances of WD = 6.4 mm in air, and WD = 8.8 mm with the lens (16) submerged in water are obtained.

Since the size of the laser focal point (15) directly determines the lateral resolution of the photoacoustic image formed by scanning the laser beam (14), the PLD light beam (2) shaping and homogenisation method with a square core multimode fibre (7) allows this important parameter to be controlled in OR-PAM scanners by selecting the fibre core (10) size and the magnification factor of the optical direction module (13). A high contrast illumination point is also obtained thanks to its approximately constant fluence profile and steep flanks, as shown in FIG. 4a. The average fluence finally reached at the square focal point (15) of about 75 $\mu$m per side is about 160 mJ/cm$^2$, which corresponds to a measured power of 90 W and a light beam (2) energy of 9 $\mu$J (measured in the air). This level of fluence is more than three times the maximum allowed to avoid damage to human skin for the 905 nm PLD wavelength used in this example, although the excess energy of the light beam (2) will serve to compensate for the energy losses that typically exist in real applications.

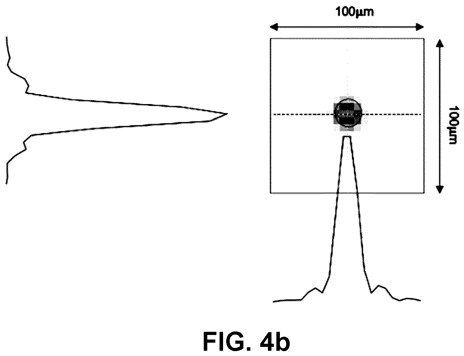

In addition, as already mentioned above, an improvement in lateral resolution can be achieved with the same optical direction module (13) by means of spatial filtering with a small opening (11), centred in front of the outlet side (7") of the fibre core (10). The focal point size (15) will then be reduced to the opening (11) size multiplied by the magnification factor $m_d$, since the optical direction module (13), as before, will focus the outgoing beam (14) with the same shape as the opening (11) in the image focal plane (18). FIG. 4b shows the cross-sectional profile of the focal point (15) resulting from spatial filtering with a diaphragm (11) with a circular aperture of 20 $\mu$m for an increase in the optical direction module (13) $m_d$ = $f_2/f_1 \approx 0.5$. Thus, the diameter of the focal point (15) is approximately 10 $\mu$m, as represented by a circular line around the central peak in FIG. 4b. It should also be noted that the pixel size of the CCD camera, 4.5 $\mu$m, prevents a better definition of the focal point (15).

Although the energy of the light beam (14) reaching the focal point (15) in FIG. 4b is consequently reduced by spatial filtering with a smaller aperture (11), the fluence at the focal point (15) is kept approximately constant thanks to the prior homogenisation of the cross-section of the light beam (2) at the end of the fibre core (10). The lateral resolution in this example is thereby improved at least up to the focal point diameter (15) of 10 $\mu$m with the same average fluence level of about 160 mJ/cm2, as for the larger focal point (15) of the square core (10) optical fibre (7) without spatial filtering, and therefore producing the same acoustic pressure amplitude.

In addition to the described OR-PAM technique, and its corresponding embodiment of the scanning device, this optical method of shaping and homogenising the light beam (2) based on optical fibres (7) with a polygonal core (10) can be applied to other photoacoustic imaging techniques, such as Acoustic Resolution Photoacoustic Microscopy and Photoacoustic Tomography in order to obtain areas of uniform fluence illumination from non-homogeneous and low-quality light sources (3).

Accordingly, all of these imaging techniques can benefit from the higher light pulse (2) repetition rate of semiconductor-based light sources (3) compared to the more powerful and expensive solid-state lasers typically used as light sources (3) for these techniques.

In both Acoustic Resolution Photoacoustic Microscopy and Photoacoustic Tomography techniques, the lateral and axial resolution depends solely on the central frequency and bandwidth of the UST (21). However, to obtain a good field of view, a larger focal area with uniform illumination is generally required. This can be achieved with optical fibres (7) having larger polygonal cross-sections, so that a greater power of light beam (2) from PLDs with larger emitting areas can be efficiently coupled to the fibre (7), in order to provide a very good illumination uniformity and the necessary average fluence level in the imaging focal plane (18), as represented in FIG. 1 for the OR-PAM scanner embodiment. In addition, the larger focal point area (15) may also be scanned through this imaging plane (18) with motorised mirrors (17), albeit using a focusing lens (16) with a wider effective aperture and focal length.

In particular, in the case of Photoacoustic Tomography scanners, image reconstruction is usually performed with *phased array* ultrasound transducers (21), which are composed of multiple ultrasound detector elements that allow capturing photoacoustic waves (20) at different viewing angles with respect to the optically illuminated field of view. The *phased array* detector elements may be distributed around the light beam (2) in an annular or hemispherical geometry, similar to the single-element annular transducer (21) in the optical direction module (13) of the OR-PAM scanner shown in FIG. 1.

## Claims

1. Optical device (1) for shaping, homogenising, directing and focusing a pulsed light beam (2) on a sample (19) of material, **characterised in that** it comprises:

   - a source (3) of light beams or pulses (2);
   - a multimode optical fibre (7) having a polygonal cross-section core (10), configured with a light inlet side (7') and outlet side (7");
   - an optical coupling module (5) adapted to direct a light beam or pulse (2) from said source (3) to the inlet side (7') of said optical fibre (7); and
   - an optical direction module (13) adapted to direct and focus a formed and homogenised light beam or pulse (14) from the outlet side (7") of said optical fibre (7) to a sample (19).

2. Device (1) according to the preceding claim, comprising a surface (12) with an opening (11) arranged on the outlet side (7") of said optical fibre (7).

3. Device (1) according to the preceding claim, wherein the opening (11) is substantially centred with respect to the core (10) of the fibre.

4. Device (1) according to any of the preceding claims, wherein the size of the opening (11) is mechanically adjustable.

5. Device (1) according to any of the preceding claims, wherein the light source (3) comprises a pulsed laser diode, a light emitting diode (LED), or a stacked array thereof.

6. Device (1) according to any of the preceding claims, wherein the multimode optical fibre (7) having a polygonal cross-section core (10) has a high numerical aperture.

7. Device (1) according to any of the preceding claims, wherein the optical coupling module (5) and/or the optical direction module (13) comprise two mobile plano-convex aspherical lenses, one for collimation (27, 29) and the other for focusing (28, 16).

8. Device (1) according to any of the preceding claims, wherein the optical direction module (13) comprises one or more motorised scanning mirrors (17).

9. System for producing photoacoustic images of a sample (19) of material, wherein said system comprises:

   - an optical device (1) according to any of the preceding claims;
   - a transducer (21) for receiving acoustic waves (20); adapted to generate electrical signals from the reception of said acoustic waves (20); and
   - a unit for acquiring and processing the electrical signals generated by the transducer (21), where said unit comprises software and/or hardware means adapted for generating photoacoustic image data from the processed electrical signals.

10. System according to the preceding claim, wherein the ultrasound transducer (21) is ring-shaped and surrounds the optical axis of the light beam (2) coaxially.

11. System according to any of claims 9-10, wherein the signal acquisition and processing unit comprises a preamplifier (22), an analogue-digital converter (23) and/or a computer (24).

12. System according to any of claims 9-11, wherein the signal acquisition and processing unit is connected to a screen or *display* (25) for real-time display of the generated photoacoustic image data.

13. Use of a device (1) according to any of claims 1-8 for producing photoacoustic images in optical-resolution photoacoustic microscopy applications, in acoustic-resolution photoacoustic microscopy applications and/or in photoacoustic tomography applications.

14. Method for producing photoacoustic images of a sample (19) of material, said method being **characterised in that** it comprises performing the following steps by operating a system according to any of claims 9-12:

   a) arranging a light source (3) adapted to emit light beams or pulses (2) with a duration in the nanosecond range and frequency in the visible or near infrared band at a distance from the sample (19) equal to or less than the length of the optical fibre (7);
   b) directing the light beams or pulses (2) coming from said source (3) to the inlet side (7') of a multimode optical fibre (7) having a polygonal cross-section core (10) by adjusting the position of the elements that make up the optical coupling module (5);
   c) focusing said formed and homogenised light beams or pulses (14) on a point of the sample (19) by adjusting the position of the elements that make up the optical direction module (13);
   d) arranging the ultrasound-receiving transducer (21) on the surface of the sample (19);
   e) electronically receiving and processing the signal captured by said transducer (21) by means of a signal acquisition and processing unit, obtaining a photoacoustic image.

15. Method according to the preceding claim, wherein steps c-e are repeated at least once, wherein each time the position of the focal point (15) of the focusing lens (16) is varied by means of a second adjustment of the position of the elements that make up the optical direction module (13), each time generating a pixel corresponding to a different point of the sample (19) in the plane perpendicular to the direction of the beam (2) and wherein a subsequent step of assembling said pixels is carried out according to the illuminated position of the sample (19) corresponding to each of them, obtaining a two-dimensional photoacoustic image of the sample (19).

16. Method according to the preceding claim, wherein said method is repeated at least once, wherein each time the position of the focusing lens (16) is varied with respect to the ultrasound transducer (21) along the direction of the beam (2), generating each time a photoacoustic image of a different plane of the sample (19) in the longitudinal direction to the direction of the beam (2) and wherein a subsequent step of assembling said images is carried out according to the illuminated position of the sample (19) corresponding to each of them, obtaining a three-dimensional image of the sample (19).

**FIG. 1**

EP 4 506 746 A1

**FIG. 2a**

**FIG. 2b**

**FIG. 2c**

FIG. 3a

FIG. 3b

150μm

150μm

**FIG. 3c**

300μm

300μm

**FIG. 4a**

FIG. 4b

# INTERNATIONAL SEARCH REPORT

| | International application No. |
|---|---|
| | PCT/ES2023/070196 |

## A. CLASSIFICATION OF SUBJECT MATTER

*G02B27/09* (2006.01)

According to International Patent Classification (IPC) or to both national classification and IPC

## B. FIELDS SEARCHED

Minimum documentation searched (classification system followed by classification symbols)

G02B, G01N, H01S

Documentation searched other than minimum documentation to the extent that such documents are included in the fields searched

Electronic data base consulted during the international search (name of data base and, where practicable, search terms used)

EPODOC, INVENES, WPI,INSPEC

## C. DOCUMENTS CONSIDERED TO BE RELEVANT

| Category* | Citation of document, with indication, where appropriate, of the relevant passages | Relevant to claim No. |
|---|---|---|
| Y | CN 102854142 A (ZENG, L.) 02/01/2013, abstract; paragraphs [0002]-[0008], [0014]-[0015], [0019]-[0021]; figure 1. | 1, 5-16 |
| Y | US 2009/0109698 A1 (KOYATA, Y. et al.) 30/04/2009, abstract; paragraphs [0011]-[0016], [0021]-[0022], [0038]-[0042], [0050]-[0058]; figures 1-4. | 1, 5-16 |
| A | WO 2009/055705 A2 (WASHINGTON UNIVERSITY IN ST. LOUIS) 30/04/2009, abstract; paragraphs [0003]-[0006], [0040]-[0047], [0074]; figure 1. | 1-16 |
| A | CN 101813672 B (UNIV SOUTH CHINA NORMAL) 25/08/2010, the whole document. | 1-16 |
| A | US 2011/0303015 A1 (CHIHARA, S. et al.) 15/12/2011, the whole document. | 1-16 |

☒ Further documents are listed in the continuation of Box C.　　　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 26/06/2023 | **(28/06/2023)** |
| Name and mailing address of the ISA/ | Authorized officer |
| OFICINA ESPAÑOLA DE PATENTES Y MARCAS<br>Paseo de la Castellana, 75 - 28071 Madrid (España)<br>Facsimile No.: 91 349 53 04 | Ó. González Peñalba<br><br>Telephone No. 305394 |

Form PCT/ISA/210 (second sheet) (July 2022)

## INTERNATIONAL SEARCH REPORT

| | International application No. |
|---|---|
| | PCT/ES2023/070196 |

| C (continuation). | DOCUMENTS CONSIDERED TO BE RELEVANT | |
|---|---|---|
| Category * | Citation of documents, with indication, where appropriate, of the relevant passages | Relevant to claim No. |
| A | JP 2003121664 A  (HIKARI SYSTEM KENKYUSHO KK) 23/04/2003, the whole document. | 1-16 |

Form PCT/ISA/210 (continuation of second sheet) (July 2022)

## INTERNATIONAL SEARCH REPORT

| | International application No. |
|---|---|
| Information on patent family members | PCT/ES2023/070196 |

| Patent document cited in the search report | Publication date | Patent family member(s) | Publication date |
|---|---|---|---|
| CN102854142 A | 02.01.2013 | NONE | |
| US2009109698 A1 | 30.04.2009 | JPWO2007007388A1 | 29.01.2009 |
| | | JP5058798B B2 | 24.10.2012 |
| | | US7643707 B2 | 05.01.2010 |
| | | WO2007007388 A1 | 18.01.2007 |
| WO2009055705 A2 | 30.04.2009 | EP3229010 A2 | 11.10.2017 |
| | | EP3229010 A3 | 10.01.2018 |
| | | US2016249812 A1 | 01.09.2016 |
| | | US10433733 B2 | 08.10.2019 |
| | | US2016081558 A1 | 24.03.2016 |
| | | JP2015062678 A | 09.04.2015 |
| | | JP6006773B B2 | 12.10.2016 |
| | | US2013245406 A1 | 19.09.2013 |
| | | US9226666 B2 | 05.01.2016 |
| | | JP2011519281 A | 07.07.2011 |
| | | JP5643101B B2 | 17.12.2014 |
| | | CN101918811 A | 15.12.2010 |
| | | CN101918811B B | 31.07.2013 |
| | | US2010268042 A1 | 21.10.2010 |
| | | US8454512 B2 | 04.06.2013 |
| | | EP2203733 A2 | 07.07.2010 |
| | | EP2203733 A4 | 01.01.2014 |
| CN101813672 A | 25.08.2010 | CN101813672B B | 10.12.2014 |
| US2011303015 A1 | 15.12.2011 | US2017265752 A1 | 21.09.2017 |
| | | US10130263 B2 | 20.11.2018 |
| | | US2014194724 A1 | 10.07.2014 |
| | | US9700214 B2 | 11.07.2017 |
| | | JP2011255028 A | 22.12.2011 |
| | | JP5587046B B2 | 10.09.2014 |
| JP2003121664 A | 23.04.2003 | NONE | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009109698 A1
- JP 2003121664 A
- EP 2228674 A1
- US 2013170806 A1
- CN 102854142 A
- US 2011303015 A1
- CN 101813672A
- WO 2009055705 A2

### Non-patent literature cited in the description

- **S. JEON** ; **J. KIM** ; **D. LEE** ; **JW BAK** ; **C. KIM**. Review on practical photoacoustic microscopy. *Photoacoustics*, 2019, vol. 15, 100141
- **M. ERFANZADEH** ; **Q. ZHU**. Photoacoustic imaging with low-cost sources; A review. *Photoacoustics*, 2019, vol. 14, 1-11
- **Q. YAO** ; **Y. DING** ; **G. LIU** ; **L. ZENG**. Low-cost photoacoustics imaging systems based on laser diode and light emitting diode excitation. *Journal of Innovative Optical Health Sciences*, 2017, vol. 10 (4), 17300038